# EUROPÄISCHE PATENTSCHRIFT

(11) **EP 4 640 038 B1**
(45) Veröffentlichungstag und Bekanntmachung des Hinweises auf die Patenterteilung: **09.12.2026**
(21) Anmeldenummer: 24172594.4
(22) Anmeldetag: 26.04.2024
(51) Int. Cl.: A01F 15/08

(54) **KOMBINATION, VERFAHREN ZUM BETREIBEN EINER KOMBINATION UND BALLENPRESSE**
COMBINATION, METHOD FOR OPERATING A COMBINATION AND BALER
COMBINAISON, PROCÉDÉ DE FONCTIONNEMENT D'UNE COMBINAISON ET PRESSE À BALLES

(43) Veröffentlichungstag der Anmeldung: 29.10.2025
(60) Teilanmeldung: 26213515.5
(73) Patentinhaber: Deere & Company, Moline, IL 61265 (US)
(72) Erfinder: GUIET, LIONEL, 68163 Mannheim (DE); PERROTIN, FREDERIC, 68163 Mannheim (DE)
(74) Vertreter: Stein, Stefan

(56) Entgegenhaltungen:
- EP-A1- 3 837 961
- EP-A1- 3 900 517
- EP-A1- 4 018 814
- EP-A1- 4 272 541
- EP-B1- 2 745 674
- US-A1- 2006 283 166
- US-A1- 20230 263 099

## Beschreibung

Die Erfindung betrifft eine Ballenpresse gemäss dem Oberbegriff des unabhängigen Anspruchs 1 und ein Verfahren zum Betreiben einer Kombination gemäss dem Oberbegriff des unabhängigen Anspruchs 12.

Ballenpressen, insbesondere Rundballenpressen oder Quaderballenpressen, werden zum Aufnehmen und Pressen von Erntegut, beispielsweise Stroh, Heu oder dergleichen eingesetzt. Die Ballenpresse kann dazu eine Aufnahmeeinheit zum Aufnehmen des Ernteguts umfassen, insbesondere zur Aufnahme des Ernteguts aus einem Schwad. Dabei kann das auf dem Boden liegende Erntegut mit der Aufnahmeeinheit, insbesondere einer Pick-up, aufgenommen werden. Die Ballenpresse kann auch eine Presseinheit umfassen. Die Presseinheit kann eine Presskammer mit einem oder mehreren Pressmittel umfassen, beispielsweise Rollen oder einen Riemen oder einen Gurt oder eine Kettenanordnung oder ein Band. Die Presseinheit kann das von der Aufnahmeeinheit aufgenommene Erntegut aufnehmen und zu einem Ballen formen oder pressen. Die Ballenpresse kann ausserdem eine Fördereinheit umfassen. Das von der Aufnahmeeinheit aufgenommene Erntegut kann mit der Fördereinheit, beispielsweise einem Rotor, in Presseinheit, insbesondere die Presskammer geleitet werden. Die Fördereinheit kann als Teil der Aufnahmeeinheit ausgebildet sein oder der Aufnahmeeinheit nachgeordnet sein, insbesondere in Förderrichtung nachgeordnet sein. In der Presseinheit wird der Ballen, insbesondere der Rundballen oder der Quaderballen, geformt. Der fertig geformte Ballen kann im Anschluss, insbesondere in der Presskammer, mit einem Wickelmaterial, beispielsweise Netz, Folie oder Bindegarn, umwickelt werden. Der fertig geformte Ballen oder der fertig umwickelte Ballen, kann über eine Auswurfeinheit, beispielsweise eine Auswurfklappe oder ein Heckteil oder eine Heckklappe der Ballenpresse, insbesondere über die mit einer Auswurfeinheit versehene Presseinheit oder Presskammer, entladen oder ausgeworfen werden. Die Aufnahmeeinheit, insbesondere die Pickup, kann antreibbar sein, um Erntegut aufzunehmen. Die Presseinheit, insbesondere die Presskammer und/oder das oder die Pressmittel, können antreibbar sein, um einen Ballen innerhalb der Presskammer zu formen oder zu pressen.

Die Ballenpresse kann Teil einer Kombination mit einem Zugfahrzeug sein. Die Ballenpresse kann mit dem Zugfahrzeug mit einer Leistung und/oder Energie und/oder einer Kraft und/oder einem Drehmoment und/oder einer Drehzahl antreibbar sein. Die Leistung und/oder Energie und/oder Kraft und/oder das Drehmoment und/oder die Drehzahl kann vom Zugfahrzeug an die Ballenpresse, insbesondere an die Presseinheit und/oder die Aufnahmeeinheit, übertragbar und/oder verteilbar sein. Nachteil der bekannten Ballenpresse bzw. Kombination ist, dass es von der Erfahrung des Bedieners der Ballenpresse oder der Zugfahrzeugs bzw. der Kombination abhängt, zu verstehen, ob sich der Energiebedarf am Maximum, also der Gesamtenergie befindet oder nicht. Die EP 4 272 541 A1 offenbart eine Kombination aus einem Zugfahrzeug und einer Ballenpresse. Dabei ist die Ballenpressensteuereinheit derart betreibbar, dass die Ballenpressensteuereinheit einer Zugfahrzeugsteuereinheit ein Haltesignal sendet, wenn das Ballensignal des Ballensensors anzeigt, dass ein Ballen eine Grösse erreicht hat, die grösser oder gleich einer ersten vorbestimmten Grösse ist. Die Zugfahrzeugsteuereinheit ist betreibbar, das Zugfahrzeug anzuweisen einen Bremsvorgang zum Stoppen des Zugfahrzeugs einzuleiten, wenn die Zugfahrzeugsteuereinheit das Haltesignal von der Ballenpressensteuereinheit empfängt.

Der vorliegenden Erfindung liegt daher die Aufgabe zugrunde eine Kombination und ein Verfahren zum Betreiben einer Kombination und eine Ballenpresse vorzuschlagen, durch welche die vorgenannten Probleme überwunden werden. Insbesondere sollen eine Ballenpresse, eine Kombination und ein Verfahren zum Betreiben einer Kombination vorgeschlagen werden, die es ermöglichen automatisch und/oder dem Bediener eine Überlast- und/oder Unterlastsituation zu vermeiden bzw. bessere Entscheidungen hinsichtlich einer möglicherweise drohenden Überlastsituation zu treffen.

Diese Aufgabe wird durch eine Kombination mit den Merkmalen des Anspruchs 1 und ein Verfahren mit den Merkmalen des Anspruchs 12. Die abhängigen Ansprüche beziehen sich auf besonders vorteilhafte Ausführungsformen der Erfindung.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Ballenpresse, und
- Fig. 2: eine schematische Darstellung eines ersten Ausführungsbeispiels der erfindungsgemässen Kombination, und
- Fig. 3: eine schematische Darstellung eines ersten Ausführungsbeispiels einer Antriebseinheit der erfindungsgemässen Kombination, und
- Fig. 4: eine schematische Darstellung eines weiteren Ausführungsbeispiels einer Antriebseinheit der erfindungsgemässen Kombination, und
- Fig. 5: ein schematisches Flussdiagramm des erfindungsgemässen Verfahrens zum Betreiben der Ballenpresse oder der Kombination.

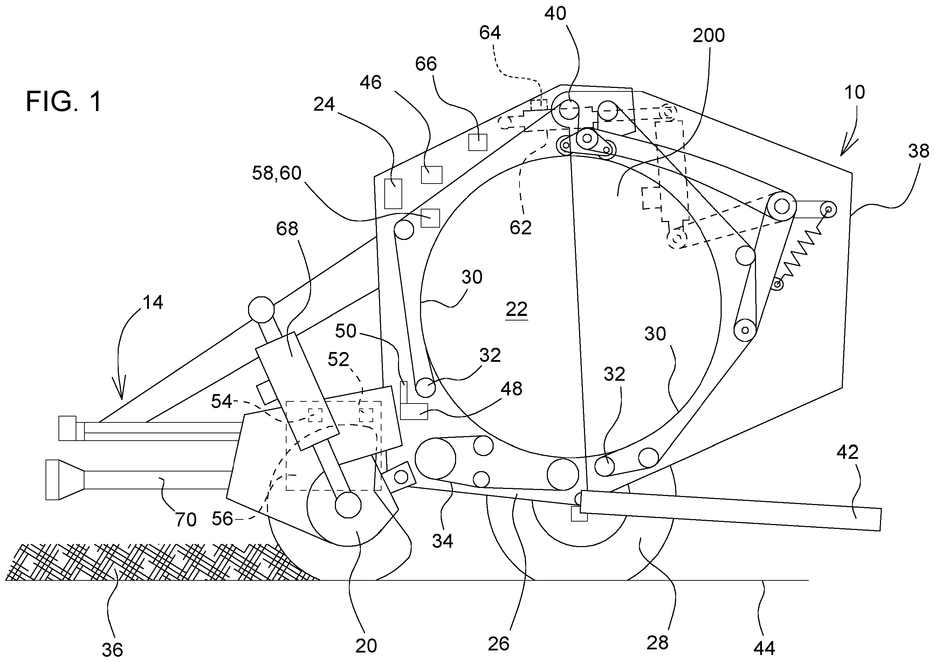

Figur 1 zeigt eine schematische Darstellung eines ersten Ausführungsbeispiels einer erfindungsgemässen Ballenpresse 10. Die Ballenpresse 10 umfasst eine Aufnahmeeinheit 20 zur Aufnahme von Erntegut vom Boden und zur Zufuhr des Ernteguts in eine Presseinheit 22. Die Ballenpresse 10 umfasst weiter die Presseinheit 22, um das aufgenommene Erntegut zu einem Ballen 200 zu formen bzw. zu pressen. Im Speziellen kann die Ballenpresse 10 eine Ballenpressensteuereinheit 24 oder eine Steuereinheit 104 umfassen. Die Ballenpresse 10 kann einen Ballenpressenrahmen 26 umfassen. Der Ballenpressenrahmen 26 kann auf Rädern 28 getragen sein. Die Presseinheit 22 kann am oder auf dem Ballenpressenrahmen 26 angeordnet, bevorzugt mit diesem verbunden und/oder an diesem befestigt und/oder getragen sein.

Die Ballenpresse 10 ist mit einer größenveränderlichen Presseinheit 22 bzw. Presskammer ausgebildet. Das Pressmittel 30 ist als eines oder mehrere Bänder oder Gurte oder Riemen ausgebildet. Das Pressmittel 30 umgibt die Presseinheit 22 bzw. Presskammer und ist mit Rollen 32 geführt. Die Ballenpresse 10 kann aber auch eine größenunveränderliche Presseinheit 22 bzw. Presskammer umfassen. Hierbei kann das Pressmittel als eine oder mehrere Pressrollen ausgebildet sein, insbesondere eine Vielzahl zueinander parallel verlaufender Pressrollen zum Pressen des Ernteguts.

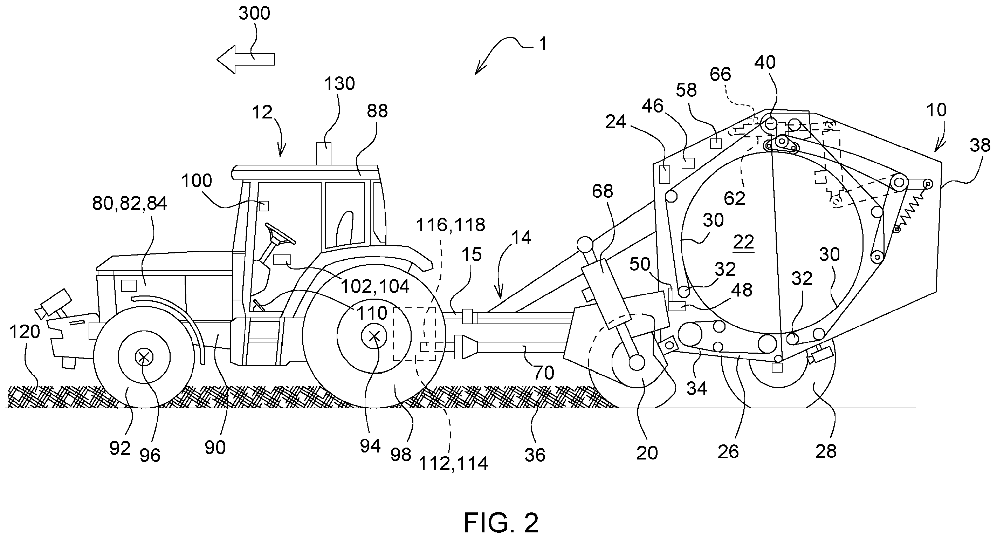

Die Aufnahmeeinheit 20, insbesondere in Form einer Pick-up, ist an der Ballenpresse 10 angeordnet und/oder mit dieser verbunden, insbesondere unterhalb der Vorderkante der Ballenpresse 10. Die Aufnahmeeinheit 20 kann sich um eine Querachse bewegenden oder drehenden Zinken umfassen. Der Aufnahmeeinheit 20 kann in einer Erntegutflussrichtung eine Fördereinheit, vorliegend ein Förderband 34, der Ballenpresse 10 folgen. Das Förderband 34 könnte auch durch einen Rotor (nicht gezeigt) ersetzt werden, oder ein Rotor könnte in Gutflussrichtung zwischen der Aufnahmeeinheit 20 und dem Förderband 34 eingefügt werden. Anstelle der Aufnahmeeinheit 20, insbesondere der Pick-up, könnten auch andere geeignete Erntegutaufnahmemittel wie Mäh- und Fördereinheiten verwendet werden. Die Aufnahmeeinheit 20 sammelt Erntegut, das insbesondere in einer Schwade 36 beispielsweise aus Gras, Heu oder Stroh, auf dem Feld liegt, und führt es der Presseinheit 22 zu. Die Pressmittel 30 können während eines Ballenpressvorgangs in ihrer Längsrichtung in Bewegung versetzt werden, indem eine oder mehrere der Rollen 32 rotierend angetrieben werden. Das in die Presseinheit 22 eingeführte Erntegut dreht sich somit auch während des Pressens. Während des Pressenvorgangs nimmt die Größe der Presseinheit 22 mit der Zeit zu. Die Ballenpresse 10 umfasst eine Auswurfeinheit 38, beispielsweise eine Auswurfklappe oder ein Heckteil oder eine Heckklappe der Ballenpresse 10. Die Auswurfeinheit 38 ist schwenkbar an der Ballenpresse 10, insbesondere dem Ballenpressenrahmen 26 oder einem Gehäuseteil, gelagert. Die Auswurfeinheit 38 ist um eine Achse 40 schwenkbar, die sich quer zur Vorwärtsrichtung 300 eines Zugfahrzeugs 12 (siehe Figur 2) und/oder der Ballenpresse 10 erstreckt. Die Auswurfeinheit 38 ist zwischen einer ersten Position, in der die Presseinheit 22 geschlossen ist, und einer zweiten Position bewegbar, in der die Presseinheit 22 zum Entladen des Ballens geöffnet ist. Ausserdem kann die Ballenpresse 10 eine Rampe 42, um den Ballen 200 auf den Boden 44 abzulegen.

Die Ballenpresse 10 kann eine Wickeleinheit 48 umfassen. Die Wickeleinheit 48 kann an der Presseinheit 22 angeordnet sein. Die Wickeleinheit 48 kann mit der Ballenpressensteuereinheit 24 oder der Steuereinheit 104 verbunden sein. Die Ballenpressensteuereinheit 24 oder die Steuereinheit 104 kann konfiguriert sein, die Wickeleinheit 48 einzustellen und/oder zu verstellen, um ein Wickelmaterial, beispielsweise Garn, Band, Netz oder Folie, an die Presseinheit 22 abzugeben. Der rotierende Ballen 200 kann an dem Wickelmaterial ziehen oder dieses einfangen, so dass es dann um den Ballen 200 gewickelt wird. Ein Wickelsensor 50 kann mit der Wickeleinheit 48 interagieren und erfassen, ob beispielsweise der Ballen 200 an der Verpackung zieht oder der Wickelvorgang abgeschlossen ist.

Die Presseinheit 22 ist mit einem ersten Energiewert und die Aufnahmeeinheit 20 ist mit einem zweiten Energiewert antreibbar. Die Ballenpressensteuereinheit 24 oder die Steuereinheit 104 kann mit der Aufnahmeeinheit 20 und der Presseinheit 22 verbunden, bevorzugt signalverbunden und/oder wirkend gekoppelt und/oder signalübertragend und/oder datenleitend verbunden sein.

Die Aufnahmeeinheit 20 und die Presseinheit 22 können mit der Steuereinheit oder der Ballenpressensteuereinheit 24 oder der Steuereinheit 104 ansteuerbar und/oder einstellbar und/oder verstellbar sein. Die Steuereinheit 104 oder die Ballenpressensteuereinheit 24 ist konfiguriert, ein Energieverbrauchssignal oder ein Zapfwellenverbrauchssignal zu empfangen, und mit dem empfangenen Signal einen Gesamtenergiewert zu ermitteln, insbesondere zu bestimmen und/oder zu berechnen. Die Steuereinheit 104 oder die Ballenpressensteuereinheit 24 ist weiter konfiguriert, den Gesamtenergiewert mit einem Ballenpressenverbrauchswert zu vergleichen, und ein Fahrsignal zum Einstellen und/oder Verstellen der Geschwindigkeit der Ballenpresse zu versenden, wenn der Gesamtenergiewert vom Ballenpressenverbrauchswert verschieden ist.

Figur 2 zeigt eine schematische Darstellung eines ersten Ausführungsbeispiels einer erfindungsgemässen Kombination 1 aus einem Zugfahrzeug 12 mit einem Antriebsstrang 80 zum Antreiben der Kombination 1, insbesondere des Zugfahrzeugs 12, und einer mittels einer Deichsel 14 vom Zugfahrzeug 12 gezogenen erfindungsgemässen Ballenpresse 10, insbesondere gemäss Figur 1. Die in Figur 2 gezeigte Ballenpresse 10 entspricht im Wesentlichen der in Figur 1 gezeigten Ballenpresse 10, sodass im Folgenden lediglich auf Details und/oder Unterschiede eingegangen wird. Die in Figur 1 gezeigte Ballenpresse 10 kann die im Folgenden beschriebenen zusätzlichen Merkmale und Eigenschaften aufweisen.

Das Zugfahrzeug 12 umfasst den Antriebsstrang 80. Das Zugfahrzeug 12, insbesondere das Antriebsstrang 80, umfasst den Motor 82, beispielsweise eine Verbrennungskraftmaschine oder einen Elektromotor. Das Zugfahrzeug 12, insbesondere das Antriebsstrang 80, kann ausserdem eine Getriebeeinheit 82, insbesondere ein Getriebe, umfassen. Der Motor 82 kann ausserdem direkt oder indirekt mit einer Eingangswelle 70 der Antriebseinheit 56 der Ballenpresse 10 mechanisch verbunden sein.

Die Kombination 1, insbesondere das Zugfahrzeug 12, umfasst die Ein- und Ausgabeeinheit 100 und die Steuereinheit 104. Die Kombination 1, insbesondere das Zugfahrzeug 12, kann aber auch die Zugfahrzeugsteuereinheit 102 umfassen. Die Ballenpressensteuereinheit 24 und die eine Zugfahrzeugsteuereinheit 102 können in die Steuereinheit 104 integriert sein. Die Steuereinheit 104 oder die Zugfahrzeugsteuereinheit 102 kann am oder im Zugfahrzeug 12 angeordnet sein. Die Steuereinheit 104 kann den Aufbau und alle Funktionalitäten und alle Verbindungen der Ballenpressensteuereinheit 24 und der Zugfahrzeugsteuereinheit 102 aufweisen und die genannten Sensoren und/oder Aktuatoren und/oder Ventile und/oder Ventilanordnungen ansteuern.

Der Antriebsstrang 80 und/oder seine Komponenten, beispielsweise der Antriebsmotor 82 und/oder die Getriebeeinheit 84, können mit der Steuereinheit 104 oder Zugfahrzeugsteuereinheit 102 verbunden und/oder ansteuerbar und/oder einstellbar und/oder verstellbar sein. Die der Steuereinheit 104 oder Zugfahrzeugsteuereinheit 102 können mit der Ein- und Ausgabeeinheit 100 verbunden, bevorzugt signalverbunden und/oder wirkend gekoppelt und/oder signalübertragend und/oder datenleitend verbunden sein. Mit der in einer Kabine 88 des Zugfahrzeugs 12 angeordneten Ein- und Ausgabeeinheit 100 können von einem Bediener der Kombination 1 in die Ein- und Ausgabeeinheit 100 eingegebene Daten und/oder Befehle an die Steuereinheit 104 oder die Zugfahrzeugsteuereinheit 102 übertragen oder von dieser empfangen werden. Ebenso können Daten und/oder Befehle mit der Ein- und Ausgabeeinheit 100 und ausgegeben werden.

Das Zugfahrzeug 12 kann einen Zugfahrzeugrahmen 90 umfassen, insbesondere auf dem Zugfahrzeugrahmen 90 getragen sein. Der Zugfahrzeugrahmen 90 kann auf Bodeneingriffsmittel getragen sein. Die Bodeneingriffsmittel, hier in Form von Vorderrädern 92 und Hinterrädern 94 dargestellt, stehen mit einem Untergrund zur Übertragung von Antriebskräften in Eingriff und/oder das Zugfahrzeug 12 stützt sich mit diesen auf dem Untergrund oder Boden ab. Die Bodeneingriffsmittel, insbesondere die Vorderräder 92 und Hinterräder 94 können lenkbar und/oder beweglich sein. Die Kabine 24 kann vom Zugfahrzeugrahmen 90 getragen sein. Ausserdem kann sich in der Kabine 24 eine Arbeitsstation des Bedieners und/oder die Ein- und Ausgabeeinheit 100 befinden. Das Zugfahrzeug 12 umfasst eine Vorderachse 96 und eine Hinterachse 98. Die Hinterachse 98 kann, insbesondere permanent, und die Vorderachse 96 kann nicht oder bedarfsweise zuschaltbar, insbesondere permanent, vom Antriebsstrang 80 angetrieben werden. Die Vorderachse 96, und/oder insbesondere die Hinterachse 98 können mit einer Lenkeinrichtung, besonders bevorzugt mit einem Lenkaktuator, einstellbar und/oder verstellbar sein. Die Kombination 1, insbesondere das Zugfahrzeug 12, ist vom oder mit dem Antriebsstrang 80, insbesondere dem Motor 82 antreibbar. Der Motor 82 kann dazu eine Drehzahl und/oder ein Drehmoment über die Getriebeeinheit 84 an die Vorder- und/oder Hinterachse 96, 98 und die Bodeneingriffsmittel übertragen, sodass die Kombination 1, insbesondere das Zugfahrzeug 12, angetrieben wird. Das Zugfahrzeug 12 kann beispielsweise auch ein Gaspedal 110 oder einen nicht gezeigten Handgashebel umfassen. Im Folgenden beziehen sich Richtungsangaben wie vorne und hinten, links und rechts auf die Vorwärtsrichtung 300 des Zugfahrzeugs 12, die in Fig. 2 nach links geht.

Die Ballenpresse 10 ist mit dem Zugfahrzeug 12 verbunden, und/oder insbesondere gekoppelt. Das Zugfahrzeug 12 ist durch die oder mit der Deichsel 14 mit der Ballenpresse 10 verbunden. Beispielsweise kann die Ballenpresse 10 mit der Deichsel 14 an eine Anhängerkupplung 15 (engl. Hitch) des Zugfahrzeugs 12 gekoppelt sein. Das Zugfahrzeug 12 kann die Ballenpresse 10 ziehen.

Die Steuereinheit 104 ist konfiguriert, ein Energieverbrauchssignal oder ein Zapfwellenverbrauchssignal zu empfangen oder zu ermitteln, und mit dem Energieverbrauchssignal oder dem Zapfwellenverbrauchssignal einen Gesamtenergiewert zu ermitteln. Die Steuereinheit 104 ist weiter konfiguriert, den Gesamtenergiewert mit einem Ballenpressenverbrauchswert zu vergleichen, und mit einem oder basierend auf einem Fahrsignal eine Geschwindigkeit der Kombination, insbesondere den Antriebsstrang 80 einzustellen und/oder zu verstellen, wenn der Gesamtenergiewert vom Ballenpressenverbrauchswert verschieden ist. Alternativ können aber auch die Ballenpressensteuereinheit 24 und die Zugfahrzeugsteuereinheit 102 diese Funktion übernehmen. Die Zugfahrzeugsteuereinheit 102 kann also konfiguriert sein, das Energieverbrauchssignal oder das Zapfwellenverbrauchssignal zu ermitteln, und die Ballenpressensteuereinheit 24 kann konfiguriert sein, das Energieverbrauchssignal oder das Zapfwellenverbrauchssignal von der Zugfahrzeugsteuereinheit 102 zu empfangen.

Die Zugfahrzeugsteuereinheit 102 kann also konfiguriert sein, das Energieverbrauchssignal oder das Zapfwellenverbrauchssignal zu ermitteln, und die Ballenpressensteuereinheit 24 kann konfiguriert sein, das Energieverbrauchssignal oder das Zapfwellenverbrauchssignal von der Zugfahrzeugsteuereinheit 102 zu empfangen. Die Ballenpressensteuereinheit 24 kann weiter konfiguriert sein, den Gesamtenergiewert mit einem Ballenpressenverbrauchswert zu vergleichen, und das Fahrsignal an die Zugfahrzeugsteuereinheit 102 senden, wenn der Gesamtenergiewert vom Ballenpressenverbrauchswert verschieden ist. Die Zugfahrzeugsteuereinheit 102 kann konfiguriert sein, mit dem oder basierend auf dem Fahrsignal eine Geschwindigkeit der Kombination, insbesondere den Antriebsstrang 80 einzustellen und/oder zu verstellen, wenn der Gesamtenergiewert vom Ballenpressenverbrauchswert verschieden ist. Der Ballenpressenverbrauchswert kann gleich der Summe des ersten und zweiten Energiewertes sein. Die Steuereinheit 104 oder die Zugfahrzeugsteuereinheit 102 kann konfiguriert sein, eine Energie und/oder ein Drehmoment und/oder eine Kraft und/oder eine Drehzahl des Antriebsstrangs 80 zu verringern, wodurch der Ballenpressenverbrauchswert verringert wird, insbesondere wenn der der Gesamtenergiewert kleiner als der oder gleich dem Ballenpressenverbrauchswert ist. Die Steuereinheit 104 oder die Zugfahrzeugsteuereinheit 102 kann konfiguriert sein, eine Energie und/oder ein Drehmoment und/oder eine Kraft und/oder eine Drehzahl des Antriebsstrangs 80 zu verringern oder zu erhöhen, wodurch der Ballenpressenverbrauchswert verringert oder erhöht wird, insbesondere wenn der der Gesamtenergiewert grösser als der Ballenpressenverbrauchswert ist. Zusätzlich kann die Steuereinheit 104 konfiguriert sein, mit einem Fahrsignal eine Geschwindigkeit der Kombination 10 einzustellen und/oder zu verstellen, wenn der Gesamtenergiewert vom Ballenpressenverbrauchswert verschieden ist. Alternativ kann Die Ballenpressensteuereinheit 24 konfiguriert sein, den Gesamtenergiewert mit einem Ballenpressenverbrauchswert zu vergleichen, und das Fahrsignal an die Zugfahrzeugsteuereinheit 102 senden, wenn der Gesamtenergiewert vom Ballenpressenverbrauchswert verschieden ist. Die Zugfahrzeugsteuereinheit 102 oder die Steuereinheit 104 kann konfiguriert sein, mit dem oder basierend auf dem Fahrsignal die Kombination 1, bevorzugt das Zugfahrzeug 12, besonders bevorzugt den Antriebsstrang 80, beispielsweise den Motor 82 oder das Getriebe oder die Getriebeeinheit 84, einzustellen und/oder zu verstellen, wenn der Gesamtenergiewert vom Ballenpressenverbrauchswert verschieden ist.

Die Steuereinheit 104 oder die Zugfahrzeugsteuereinheit 102 kann konfiguriert sein, eine Energie und/oder ein Drehmoment und/oder eine Kraft und/oder eine Drehzahl des Antriebsstrangs 80, insbesondere des Motors 82 oder des Getriebes oder der Getriebeeinheit 84, zu verringern, wodurch der Ballenpressenverbrauchswert verringert wird, insbesondere wenn der der Gesamtenergiewert kleiner als der oder gleich dem Ballenpressenverbrauchswert ist. Die Steuereinheit 104 oder die Zugfahrzeugsteuereinheit 102 kann konfiguriert sein, eine Energie und/oder ein Drehmoment und/oder eine Kraft und/oder eine Drehzahl des Antriebsstrangs 80, insbesondere des Motors 82 oder des Getriebes oder der Getriebeeinheit 84, zu erhöhen, wodurch der Ballenpressenverbrauchswert erhöht wird, insbesondere wenn der der Gesamtenergiewert grösser als der Ballenpressenverbrauchswert ist. Zusätzlich kann die Steuereinheit 104 konfiguriert sein, den Gesamtenergiewert mit dem Ballenpressenverbrauchswert zu vergleichen, und mit einem Stellsignal eine Dichte des Ballens einzustellen und/oder zu verstellen, wenn der Gesamtenergiewert vom Ballenpressenverbrauchswert verschieden ist. Alternativ kann Die Ballenpressensteuereinheit 24 konfiguriert sein, den Gesamtenergiewert mit einem Ballenpressenverbrauchswert zu vergleichen, und mit dem Stellsignal eine Dichte des Ballens einzustellen und/oder zu verstellen, wenn der Gesamtenergiewert vom Ballenpressenverbrauchswert verschieden ist.

Die Zugfahrzeugsteuereinheit 102 oder die Steuereinheit 104 kann konfiguriert sein, mit dem oder basierend auf dem Stellsignal die Ballenpresse 10, bevorzugt einen ersten Aktuator 58, einzustellen und/oder zu verstellen, wenn der Gesamtenergiewert vom Ballenpressenverbrauchswert verschieden ist. Die Steuereinheit 104 oder die Zugfahrzeugsteuereinheit 102 kann konfiguriert sein, mit dem Stellsignal ein Drehmoment und/oder eine Kraft des ersten Aktuators 58 auf den Ballen zu verringern, wodurch der Druck bzw. der Ballenformungsdruck, und somit insbesondere Ballenpressenverbrauchswert, bevorzugt der erste Energiewert, verringert wird, insbesondere wenn der der Gesamtenergiewert kleiner als der oder gleich dem Ballenpressenverbrauchswert ist. Die Steuereinheit 104 oder die Zugfahrzeugsteuereinheit 102 kann konfiguriert sein, mit dem Stellsignal ein Drehmoment und/oder eine Kraft des ersten Aktuators 58 auf den Ballen zu erhöhen, wodurch der Druck bzw. der Ballenformungsdruck, und somit insbesondere Ballenpressenverbrauchswert, bevorzugt der erste Energiewert, erhöht wird, insbesondere wenn der der Gesamtenergiewert grösser als der Ballenpressenverbrauchswert ist.

Das Zugfahrzeug 12 umfasst die Zapfwelleneinheit 112. Die Zapfwelleneinheit 112 kann insbesondere ein Zapfwellengetriebe 118 und/oder eine Zapfwelle 116 umfassen. Die Zapfwelleneinheit 112 ist mit dem Antriebsstrang 80, insbesondere dem Motor 82 und/oder der Getriebeeinheit 84 antreibbar. Die Zapfwelleneinheit 112 ist mit der Ballenpresse 10 zum Antreiben der Presseinheit 22 und der Aufnahmeeinheit 20 mechanisch verbunden. Das Zugfahrzeug 12 umfasst den Zapfwellensensor 114 zur Erfassung, insbesondere zur direkten oder indirekten Erfassung, des Zapfwellenverbrauchssignals umfassen. Der Zapfwellensensor 114 kann mit der Zugfahrzeugsteuereinheit 102 oder der Steuereinheit 104 verbunden sein, bevorzugt signalverbunden und/oder wirkend gekoppelt und/oder signalübertragend und/oder datenleitend verbunden sein. Der Zapfwellensensor 114 kann eine Energie und/oder ein Drehmoment und/oder eine Drehzahl an oder in der Zapfwelleneinheit 112, insbesondere am oder in einem Zapfwellengetriebe 118 und/oder der Zapfwelle 116, insbesondere in Form eines Zapfwellenverbrauchssignals, ermitteln.

Die Steuereinheit 104 oder die Zugfahrzeugsteuereinheit 102 kann konfiguriert sein, mit dem oder basierend auf dem Fahrsignal eine Ein- und Ausgabeeinheit 100 anzusteuern, sodass die Ein- und Ausgabeeinheit 100 dem Bediener signalisiert, eine Geschwindigkeit des Zugfahrzeugs 12 zu ändern bzw. die Ein- und Ausgabeeinheit 100 konfiguriert ist dem Bediener zu signalisieren, eine Geschwindigkeit des Zugfahrzeugs 12 zu ändern. Ebenso kann die Zugfahrzeugsteuereinheit 102 oder die Steuereinheit 104 konfiguriert sein, mit dem oder basierend auf dem Fahrsignal, ein Operatorsignal an die Ein- und Ausgabeeinheit 100 des Zugfahrzeugs 12 abzugeben oder zu senden, und die Ein- und Ausgabeeinheit konfiguriert sein, dem Bediener zu signalisieren, eine Geschwindigkeit des Zugfahrzeugs 12 zu ändern. Im Speziellen kann die Ballenpressensteuereinheit 24 oder die Steuereinheit 104 konfiguriert sein, eine Ausgabegrösse des vollständig ausgebildeten Ballens einzustellen, wobei die Ausgabegrösse definiert, wann der vollständig ausgebildete Ballen ausgegeben wird.

Die Steuereinheit 104, alternativ die Ballenpressensteuereinheit 24 und die Zugfahrzeugsteuereinheit 102, kann konfiguriert sein, mit dem oder basierend auf dem Fahrsignal eine Geschwindigkeit der Kombination 1 einzustellen und/oder zu verstellen und /oder mit dem oder basierend auf dem Stellsignal eine Dichte des Ballens einzustellen und/oder zu verstellen, ohne die Ausgabegrösse zu verändern, wenn der Gesamtenergiewert vom Ballenpressenverbrauchswert verschieden ist. Die Ausgabegrösse kann ein Volumen und/oder Durchmesser und/oder ein Radius und/oder eine Masse des Ballens, und/oder eine Spannung der Pressmittel und/oder eine Verteilung des Ernteguts, insbesondere eine seitliche Verteilung des Ernteguts im Schwad ist. Ebenso kann die Ballenpressensteuereinheit 24 oder die Steuereinheit 104 konfiguriert sein, mit dem Stellsignal eine Dichte des Ballens einzustellen und/oder zu verstellen, insbesondere aufrechtzuerhalten, wenn der erste Energiewert von einem gegenwärtig benötigten Energiewert der Presseinheit 22 verschieden ist.

Die Kombination 1, insbesondere die Ballenpresse 10, kann einen ersten Sensor 52 zur Erfassung des ersten Energiewertes der Presseinheit 22 und des zweiten Energiewertes der Aufnahmeeinheit 20 umfassen. Die Steuereinheit 104 oder die Ballenpressensteuereinheit 24 kann mit dem ersten Sensor 52 verbunden sein, bevorzugt signalverbunden und/oder wirkend gekoppelt und/oder signalübertragend und/oder datenleitend verbunden sein. Im Weiteren kann die Steuereinheit 104 oder die Ballenpressensteuereinheit 24 konfiguriert sein, anhand des Signals des ersten Sensors 52 die Summe des ersten und zweiten Energiewertes zu ermitteln. Alternativ oder zusätzlich kann die Kombination 1, insbesondere die Ballenpresse 10, den ersten Sensor 52 zur Erfassung des ersten Energiewertes der Presseinheit 22 und einen zweiten Sensor 54 zur Erfassung des zweiten Energiewertes der Aufnahmeeinheit 20 umfassen. Dabei kann die Steuereinheit mit dem ersten und zweiten Sensor 52, 54 verbunden sein, bevorzugt signalverbunden und/oder wirkend gekoppelt und/oder signalübertragend und/oder datenleitend verbunden sein. In diesem Fall kann die Steuereinheit 104 oder die Ballenpressensteuereinheit 24 konfiguriert sein, anhand der Signale des ersten und zweiten Sensors 52, 54 den ersten und zweiten Energiewert und die Summe des ersten und zweiten Energiewertes zu ermitteln. Die Ballenpresse 10 kann auch eine Antriebseinheit 56 umfassen, die mit der Presseinheit 22 und der Aufnahmeeinheit 20 mechanisch verbunden ist und mit der die Presseinheit 22 und Aufnahmeeinheit 20 antreibbar sein können.

Die Ballenpresse 10 kann einen oder mehrere Ballensensoren 46 umfassen, um die Ausgabegrösse, insbesondere an oder in der Presseinheit 22, zu erfassen bzw. mit dem die Ausgabegrösse erfasst wird. Die Steuereinheit 24 oder die Ballenpressensteuereinheit 24 kann mit dem Ballensensor 46 verbunden, bevorzugt signalverbunden und/oder wirkend gekoppelt und/oder signalübertragend und/oder datenleitend verbunden sein. Die Steuereinheit 24 oder die Ballenpressensteuereinheit 24 kann mit dem Ballensensor 46 beispielsweise mittels eines Kabels, insbesondere mit einem lösbaren Stecker, oder über eine Funkverbindung verbunden sein. Der Ballensensor 46 kann an oder in der Presseinheit 22 angeordnet sein, insbesondere in dieser befestigt. Die von den Ballensensor 46 erfasste Ausgabegrösse kann beispielsweise einem Bediener auf einer Ein- und Ausgabeeinheit 100 angezeigt werden.

Die Kombination 1, bevorzugt die Ballenpresse 10, besonders bevorzugt die Presseinheit 22, umfasst den ersten Aktuator 58 zum Einstellen und/oder Verstellen der Presseinheit 22. Der erste Aktuator 58 kann zum Einstellen und/oder Verstellen der Presseinheit 22, bevorzugt der Pressmittel, besonders bevorzugt des Drucks bzw. der Ballenformungsdrucks der Pressmittel, ausgebildet sein. Der erste Aktuator kann mit der Steuereinheit 104 oder der Ballenpressensteuereinheit 24 verbunden sein, insbesondere signalverbunden und/oder wirkend gekoppelt und/oder signalübertragend und/oder datenleitend verbunden sein. Die Ballenpresse 10, insbesondere die Presseinheit 22, umfasst ein erstes Ventil oder eine erste Ventilanordnung 60, insbesondere ein erstes Steuerventil, zum Ansteuern und/oder Einstellen und/oder Verstellen des ersten Aktuators. Das erste Ventil oder die erste Ventilanordnung 60 kann mit der Steuereinheit 104 oder der Ballenpressensteuereinheit 24 verbunden sein, insbesondere signalverbunden und/oder wirkend gekoppelt und/oder signalübertragend und/oder datenleitend verbunden sein. Die Steuereinheit 104 oder die Ballenpressensteuereinheit 24 kann konfiguriert sein in Abhängigkeit vom Stellsignal die Presseinheit 22, bevorzugt die Dichte des Ballens, besonders bevorzugt den Druck oder Ballenformungsdrucks der Pressmittel einzustellen und/oder zu verstellen, insbesondere wenn der Gesamtenergiewert vom Ballenpressenverbrauchswert verschieden ist. Der erste Aktuator 58 ist in Form eines Hydraulikzylinders ausgebildet.

Die Steuereinheit 24 oder die Ballenpressensteuereinheit 24 kann mit einem zweiten Aktuator 62, insbesondere einem Hydraulikzylinder, verbunden, bevorzugt signalverbunden und/oder wirkend gekoppelt und/oder signalübertragend und/oder datenleitend verbunden. Die Steuereinheit 24 kann insbesondere über ein Ventil oder eine zweite Ventilanordnung 64 mit dem zweiten Aktuator 62 verbunden sein. Die Auswurfeinheit 38 ist mit dem zweiten Aktuator 62 zwischen der ersten Position, in der die Presseinheit 22 geschlossen ist, und der zweiten Position bewegbar, in der die Presseinheit 22 zum Entladen des Ballens geöffnet ist. Der zweite Aktuator 62 in Form eines Hydraulikzylinders ist mit einem Ende mit der Ballenpresse 10, beispielsweise mit dem Ballenpressenrahmen 26 bzw. dem Gehäuse, und mit einem zweiten Ende mit der Auswurfeinheit 38 verbunden, insbesondere schwenkbar verbunden oder befestigt. Die Auswurfeinheit 38 kann aber auch schwenkbar angelenkt, also an einem Angelpunkt schwenkbar befestigt sein. Der zweite Aktuator 62 kann mit der Auswurfeinheit 38 derart verbunden sein, dass er die Auswurfeinheit 38 um die Achse 40 nach oben (in Fig. 1 gegen den Uhrzeigersinn) schwenken kann, sodass der Ballen 200 aus der Presseinheit 22 auswerfbar ist. Die Auswurfeinheit 38 kann also mit dem Zweiten Aktuator 62 geöffnet oder geschlossen bzw. angehoben und abgesenkt werden. Der Zweiten Aktuator 62 kann mit der Steuereinheit 104 oder der Ballenpressensteuereinheit 24 mit oder über die Ventilanordnung 64, beispielsweise über eine elektromagnetische oder eine hydraulische Ventilanordnung, eingestellt und/oder verstellt und/oder angesteuert werden. Die Ventilanordnung 64 kann dabei mit der Steuereinheit 104 oder der Ballenpressensteuereinheit 24 eingestellt und/oder verstellt und/oder angesteuert werden. Ein Auswurfklappensensor 66 kann beispielsweise die Position des zweiten Aktuators 62 oder der Auswurfeinheit 38 erfassen. Die Auswurfeinheit 38, insbesondere der zweite Aktuator 62, kann mit der Ballenpressensteuereinheit 24 derart betreibbar, insbesondere einstellbar und/oder verstellbar und/oder ansteuerbar sein, dass die Auswurfeinheit 38, insbesondere der zweite Aktuator 62, zwischen einer ersten Position (Ballenpresse geschlossen) und einer zweiten Position (Ballenpresse geöffnet) bewegt wird.

Die Aufnahmeeinheit 20 kann beispielsweise mit einem dritten Aktuator 68, hier in Form eines Hydraulikzylinders, angehoben und abgesenkt werden. Der dritte Aktuator 68 kann mit der Steuereinheit 104 oder der Ballenpressensteuereinheit 24, beispielsweise über eine dritte Ventilanordnung oder ein drittes Ventil (nicht dargestellt), eingestellt und/oder verstellt und/oder angesteuert werden. Die dritte Ventilanordnung kann beispielsweise eine hydraulische oder elektromagnetische Ventilanordnung sein. Die dritte Ventilanordnung kann mit der Steuereinheit 104 oder der Ballenpressensteuereinheit 24 eingestellt und/oder verstellt und/oder angesteuert werden.

Die Kombination 1, bevorzugt das Zugfahrzeug 12, kann eine Erfassungseinrichtung 120, hier als eine Kamera ausgebildet, umfassen. Die Erfassungseinrichtung 120 kann, wie gezeigt, an die Vorderseite des Zugfahrzeugs 12, montiert sein. Die Erfassungseinrichtung 120 ist auf die Schwade 36 gerichtet. Die Erfassungseinrichtung 120 bzw. die Kamera liefert ein Erfassungssignal bzw. ein Videosignal an die Zugfahrzeugsteuereinheit 102 oder die Steuereinheit 104 oder ein Bildverarbeitungssystem (nicht gezeigt). Das Erfassungssignal bzw. Videosignal kann im Bildverarbeitungssystem verarbeitet werden. Das Bildverarbeitungssystem kann insbesondere als Teil der Zugfahrzeugsteuereinheit 102 oder die Steuereinheit 104 ausgebildet sein, um eine elektronische Angabe über die Position des Zugfahrzeugs 12 in Bezug auf die Schwade 36 bereitzustellen. Das Bildverarbeitungssystem kann ausserdem eine Solllinie des Schwads, insbesondere eine Längsmittelachse des Schwads bestimmen.

Ebenso kann das Bildverarbeitungssystem ein Lenksignal an eine Lenksteuerung der Kombination 1 und/oder die Zugfahrzeugsteuereinheit 102 oder die Steuereinheit 104 senden bzw. die Zugfahrzeugsteuereinheit 102 oder die Steuereinheit 104 können das Lenksignal empfangen. Das Lenksignal kann aber auch von Zugfahrzeugsteuereinheit 102 oder die Steuereinheit 104 mit oder in Abhängigkeit vom Erfassungssignal oder der Solllinie des Schwads erzeugt oder generiert werden. Die Zugfahrzeugsteuereinheit 102 oder die Steuereinheit 104 kann eine Lenksteuerung umfassen bzw. die Lenksteuerung kann als Teil der Zugfahrzeugsteuereinheit 102 oder die Steuereinheit 104 ausgebildet sein, also in die Zugfahrzeugsteuereinheit 102 oder die Steuereinheit 104 integriert sein. Dadurch kann die Zugfahrzeugsteuereinheit 102 oder die Steuereinheit 104 die Kombination 1 entlang des Schwads 36, insbesondere der Solllinie des Schwads oder der Längsmittelachse des Schwads lenken.

Die Kombination 1, insbesondere das Zugfahrzeug 12, kann auch eine GPS-Einrichtung 32 zur Bestimmung der Position der Kombination 1 in Form eines Positionssignals umfassen. Die Zugfahrzeugsteuereinheit 102 oder die Steuereinheit 104 ist mit der GPS-Einrichtung 130 verbunden. Die Zugfahrzeugsteuereinheit 102 oder die Steuereinheit 104 empfängt das Positionssignal von der GPS-Einrichtung 130. Mit der GPS-Einrichtung 130 oder der Zugfahrzeugsteuereinheit 102 oder der Steuereinheit 104 könne also Positionsdaten versendbar und/oder empfangbar sein, und/oder insbesondere berechenbar sein. Die GPS-Einrichtung 32 kann beispielsweise einen Positionsdaten empfangende GPS-Antenne und einen Speicher umfassen. Im Speicher der GPS-Einrichtung 130 oder der Zugfahrzeugsteuereinheit 102 oder der Steuereinheit 104 kann die Position des Schwads 36 gespeichert sein, die aus früheren Arbeitsgängen bekannt ist. Die Kombination 1, insbesondere das Zugfahrzeug 12, kann dann so gelenkt werden, dass die Position der Kombination 1 oder des Zugfahrzeugs 12, die von der GPS-Einrichtung 130 bereitgestellt werden, und die Position des Schwads 36 aus dem Speicher übereinstimmen. Lenkdaten könnten auch durch die Zugfahrzeugsteuereinheit 102 oder die Steuereinheit 104 und/oder durch die Lenksteuerung bestimmt und/oder ermittelt, und/oder berechnet werden. Ein Vorteil der vorliegenden Erfindung besteht darin, dass eine Überlastung oder Unterlastung der Ballenpresse 10 bzw. der Kombination 1 vermieden werden kann.

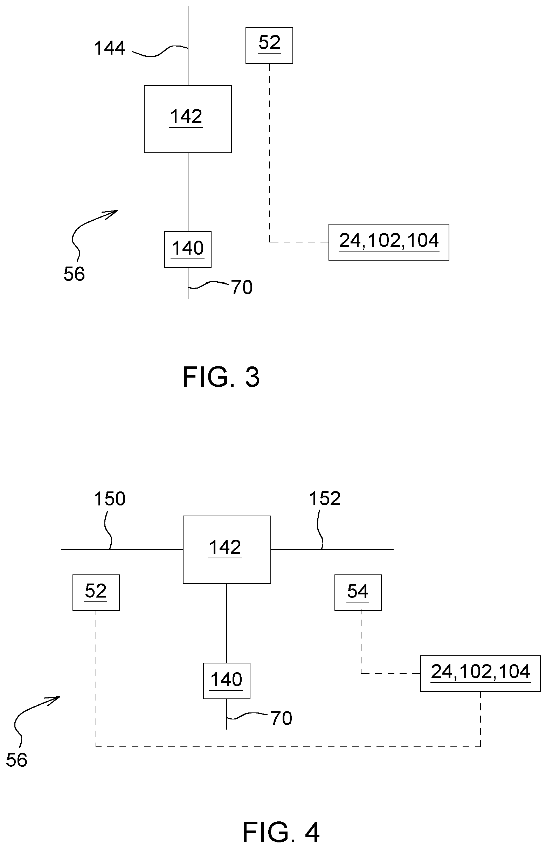

Figur 3 zeigt eine schematische Darstellung eines ersten Ausführungsbeispiels einer Antriebseinheit 56 der erfindungsgemässen Ballenpresse 10. Die in den Figuren 1 und 2 gezeigte Ballenpressen 10 können kann die in Figur 3 gezeigte Antriebseinheit 56 umfassen.

Die Ballenpresse 10 umfasst eine Antriebseinheit 56, die mit der Presseinheit 22 und der Aufnahmeeinheit 20 mechanisch verbunden ist und mit der die Presseinheit 22 und die Aufnahmeeinheit 20 antreibbar sind. Die Antriebseinheit 56 umfasst die Eingangswelle 70 und eine optionale Überlastkupplung 140 und eine Ausgangswelle 144, wobei die Presseinheit 22 und die Aufnahmeeinheit 20 von oder mit der Antriebseinheit 56 mit der Ausgangswelle 144 antreibbar sein können. Die Antriebseinheit 56 kann von oder mit der Zapfwelleneinheit 112 antreibbar sein. Im Speziellen kann die Eingangswelle 70 mit der Zapfwelle 116 mechanisch verbunden sein und/oder von oder mit der Zapfwelle 116 antreibbar sein. An oder in der Eingangswelle 70 ist die optionale Überlastkupplung 140 angeordnet oder die Eingangswelle 70 kann diese umfassen. Ausserdem umfasst die Antriebseinheit 56 eine optionale Getriebeeinrichtung 142. Die Getriebeeinrichtung 142 ist mit der Eingangswelle 70 mechanisch verbunden sein und/oder über die oder mit der Eingangswelle 70 antreibbar sein. Die Getriebeeinrichtung ist mit der Ausgangswelle 144 mechanisch verbunden.

Die Kombination, insbesondere die Ballenpresse 10, kann einen ersten Sensor 52 zur Erfassung des ersten Energiewertes der Presseinheit 22 und zur Erfassung des zweiten Energiewertes der Aufnahmeeinheit 20 umfassen. Die Steuereinheit 104 oder die Ballenpressensteuereinheit 24 ist mit dem ersten Sensor 52 verbunden, bevorzugt signalverbunden und/oder wirkend gekoppelt und/oder signalübertragend und/oder datenleitend verbunden. Die Steuereinheit 104 oder die Ballenpressensteuereinheit 24 ist konfiguriert, anhand des Signals des ersten Sensors 52 die Summe des ersten und zweiten Energiewertes zu ermitteln, insbesondere an der Ausgangswelle 144 oder der Getriebeeinheit der Antriebseinheit.

Figur 4 zeigt eine schematische Darstellung eines weiteren Ausführungsbeispiels einer Antriebseinheit 56 der erfindungsgemässen Ballenpresse 10. Die in den Figuren 1 bis 2 gezeigte Ballenpressen 10 können die in Figur 4 gezeigte Antriebseinheit 56 umfassen. Die in Figur 4 gezeigte Antriebseinheit 56 entspricht im Wesentlichen der in Figur 3 gezeigten Antriebseinheit 56, sodass im Folgenden lediglich auf Details und/oder Unterschiede eingegangen wird.

Die Antriebseinheit 56 umfasst die Eingangswelle 70 und die optionale Überlastkupplung 140 und eine erste und zweite Antriebswelle 150, 152. Dabei kann die Presseinheit 22 von oder mit der Antriebseinheit mit der ersten Antriebswelle 150, insbesondere mit einem ersten Energiewert, antreibbar sein. Die Aufnahmeeinheit 20 kann von oder mit der Antriebseinheit 56 mit der zweiten Antriebswelle 152, insbesondere mit dem zweiten Energiewert, antreibbar sein. Getriebeeinrichtung 142 kann mit der ersten und/oder zweiten Antriebswelle 150, 152 mechanisch verbunden sein. Die erste und/oder zweite Antriebswelle 150, 152 können über die oder mit der Getriebeeinrichtung 142 antreibbar sein. Die Ballenpresse 10 umfasst einen ersten Sensor 52 zur Erfassung des ersten Energiewertes der Presseinheit 22 und einen zweiten Sensor 54 zur Erfassung des zweiten Energiewertes der Aufnahmeeinheit 20. Die Steuereinheit 104 oder die Ballenpressensteuereinheit 24 ist mit dem ersten und zweiten Sensor 52, 54 verbunden, bevorzugt signalverbunden und/oder wirkend gekoppelt und/oder signalübertragend und/oder datenleitend verbunden.

Die Steuereinheit 104 oder die Ballenpressensteuereinheit 24 ist konfiguriert, anhand der oder mit den Signalen des ersten und zweiten Sensors 52, 54 den ersten und zweiten Energiewert und die Summe des ersten und zweiten Energiewertes zu ermitteln. Somit ist der erste Energiewert mit dem ersten Sensor 52 an der ersten Antriebswelle 150 der Antriebseinheit 56 ermittelbar ist und der zweite Energiewert mit dem zweiten Sensor 54 an einer zweiten Antriebswelle 152 der Antriebseinheit 56 ermittelbar ist

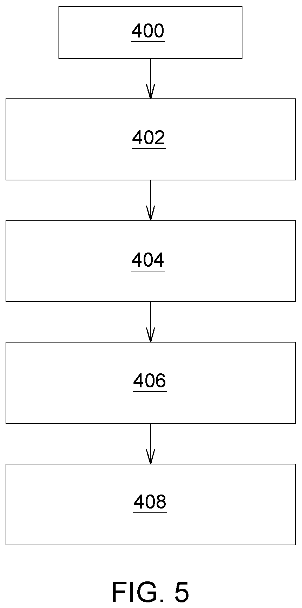

Figur 5 zeigt ein schematisches Flussdiagramm des erfindungsgemässen Verfahren zum Betreiben der erfindungsgemässen Ballenpresse 10 oder der erfindungsgemässen Kombination 1. Die in Figur 5 gezeigte Arbeitsweise ist mit den in den Figuren 1 bis 4 gezeigten Ballenpressen 10 und/oder Kombinationen 1 durchführbar.

Nach dem Start im Schritt 400 folgt der Schritt 402, in dem die Zugfahrzeugsteuereinheit 102 oder der Steuereinheit 104 ein Energieverbrauchssignal oder ein Zapfwellenverbrauchssignal ermittelt. Die Zugfahrzeugsteuereinheit 102 kann das Energieverbrauchssignal oder das Zapfwellenverbrauchssignal an die Ballenpressensteuereinheit 24 übermitteln, insbesondere senden und das Energieverbrauchssignal oder das Zapfwellenverbrauchssignal von der Ballenpressensteuereinheit 24 empfangen werden. Im folgenden Schritt 404 wird von der Ballenpressensteuereinheit 24 oder der Steuereinheit 104 mit dem empfangenen Signal einen Gesamtenergiewert ermittelt und der Gesamtenergiewert mit einem Ballenpressenverbrauchswert verglichen.

In Schritt 406 wird mit dem oder basierend auf dem Fahrsignal der Antriebsstrang 80 eingestellt und/oder verstellt, wenn der Gesamtenergiewert vom Ballenpressenverbrauchswert verschieden ist. Alternativ kann die Ballenpressensteuereinheit 24 das Fahrsignal versenden und die Zugfahrzeugsteuereinheit 102 empfängt das Fahrsignal. Mit dem oder basierend auf dem Fahrsignal kann die Zugfahrzeugsteuereinheit 102 den Antriebsstrang einstellen und/oder verstellen.

Zusätzlich kann gemäss dem optionalen Schritt 408 die Zugfahrzeugsteuereinheit 102 oder die Steuereinheit 104 mit dem oder basierend auf dem Stellsignal eine Dichte des Ballens eingestellt und/oder verstellt werden.

Dadurch kann vorteilhafterweise eine Überlastung oder Unterlastung der Ballenpresse 10 bzw. der Kombination 1 vermieden werden und der Betrieb der Ballenpresse 10 bzw. Kombination 1 optimiert werden.

## Patentansprüche

1. Zugfahrzeug-Ballenpressen-Kombination, umfassend ein Zugfahrzeug (12) und eine Ballenpresse (10), wobei das Zugfahrzeug (12) einen Antriebsstrang (80) zum Antrieb des Zugfahrzeugs (12) und eine Zapfwelleneinheit (112) umfasst, und die Ballenpresse eine Aufnahmeeinheit (20), zum Aufnehmen eines Ernteguts vom Boden und zur Zufuhr des Ernteguts in eine Presseinheit (22), und die Presseinheit (22), zum Aufnehmen des Ernteguts von der Aufnahmeeinheit und zum Pressen eines Ballens, umfasst, und die Kombination eine Steuereinheit (104) umfasst, wobei die Steuereinheit (104) mit dem Antriebsstrang (80) verbunden ist, und die Presseinheit (22) mit einem ersten Energiewert antreibbar ist, und die Steuereinheit (104) konfiguriert ist, ein Energieverbrauchssignal oder ein Zapfwellenverbrauchssignal zu empfangen oder zu ermitteln, und mit dem Energieverbrauchssignal oder dem Zapfwellenverbrauchssignal einen Gesamtenergiewert zu ermitteln, **dadurch gekennzeichnet, dass** die Aufnahmeeinheit (20) mit einem zweiten Energiewert antreibbar ist, und die Steuereinheit (104) weiter konfiguriert ist, den Gesamtenergiewert mit einem Ballenpressenverbrauchswert zu vergleichen, und mit einem Fahrsignal eine Geschwindigkeit der Kombination (1), insbesondere den Antriebsstrang (80), einzustellen und/oder zu verstellen, wenn der Gesamtenergiewert vom Ballenpressenverbrauchswert verschieden ist.

2. Kombination nach Anspruch 1, **dadurch gekennzeichnet, dass** Steuereinheit (104) konfiguriert ist, den Gesamtenergiewert mit einem Ballenpressenverbrauchswert zu vergleichen, und mit einem Stellsignal eine Dichte des Ballens einzustellen und/oder zu verstellen, wenn der Gesamtenergiewert vom Ballenpressenverbrauchswert verschieden ist.

3. Kombination nach mindestens einem der vorangehenden Ansprüche, **dadurch gekennzeichnet, dass** der Ballenpressenverbrauchswert gleich der Summe des ersten und zweiten Energiewertes ist.

4. Kombination nach mindestens einem der vorangehenden Ansprüche, **dadurch gekennzeichnet, dass** die Kombination (1) einen ersten Sensor (52) zur Erfassung des ersten Energiewertes der Presseinheit (22) und zur Erfassung des zweiten Energiewertes der Aufnahmeeinheit (20) umfasst, wobei die Steuereinheit (104) mit dem ersten Sensor (52) verbunden ist, und die Steuereinheit (104) konfiguriert ist, anhand des Signals des ersten Sensors (52) die Summe des ersten und zweiten Energiewertes zu ermitteln.

5. Kombination nach mindestens einem der vorangehenden Ansprüche, **dadurch gekennzeichnet, dass** die Kombination (1) einen ersten Sensor (52) zur Erfassung des ersten Energiewertes der Presseinheit (22) und einen zweiten Sensor (54) zur Erfassung des zweiten Energiewertes der Aufnahmeeinheit (20) umfasst, wobei die Steuereinheit (104) mit dem ersten und zweiten Sensor (52, 54) verbunden ist, und die Steuereinheit (104) konfiguriert ist, anhand der Signale des ersten und zweiten Sensors (52, 54) den ersten und zweiten Energiewert und die Summe des ersten und zweiten Energiewertes zu ermitteln.

6. Kombination nach mindestens einem der vorangehenden Ansprüche, **dadurch gekennzeichnet, dass** die Kombination (1) eine Antriebseinheit (56) umfasst, die mit der Presseinheit (22) und der Aufnahmeeinheit (20) mechanisch verbunden ist und mit der die Presseinheit (22) und die Aufnahmeeinheit (20) antreibbar sind.

7. Kombination nach mindestens einem der vorangehenden Ansprüche, **dadurch gekennzeichnet, dass** der erste Energiewert mit dem ersten Sensor (52) an einer ersten Antriebswelle (150) der Antriebseinheit (56) ermittelbar ist und der zweite Energiewert mit dem zweiten Sensor (54) an einer zweiten Antriebswelle (152) der Antriebseinheit (56) ermittelbar ist oder die Summe des ersten und zweiten Energiewerts mit dem ersten Sensor (52) an einer Ausgangswelle (144) oder Getriebeeinheit der Antriebseinheit (56) ermittelbar ist.

8. Kombination nach mindestens einem der vorangehenden Ansprüche, **dadurch gekennzeichnet, dass** die Steuereinheit (104) konfiguriert ist:
eine Ausgabegrösse des vollständig ausgebildeten Ballens (200) einzustellen, wobei die Ausgabegrösse definiert, wann der vollständig ausgebildete Ballen ausgegeben wird, und mit dem Fahrsignal eine Geschwindigkeit der Kombination (1) einzustellen und/oder zu verstellen und /oder mit dem Stellsignal eine Dichte des Ballens (200) einzustellen und/oder zu verstellen, und die Ausgabegrösse nicht zu verändern, wenn der Gesamtenergiewert vom Ballenpressenverbrauchswert verschieden ist.

9. Kombination nach mindestens einem der vorangehenden Ansprüche, **dadurch gekennzeichnet, dass** die Ausgabegrösse ein Volumen und/oder Durchmesser und/oder ein Radius und/oder eine Masse des Ballens (200) und/oder eine Spannung der Pressmittel (30) und/oder eine Verteilung des Ernteguts, insbesondere eine seitliche Verteilung des Ernteguts im Schwad (36) ist.

10. Kombination nach mindestens einem der vorangehenden Ansprüche, **dadurch gekennzeichnet, dass** die Steuereinheit (104) konfiguriert ist, mit dem Stellsignal eine Dichte des Ballens (200) einzustellen und/oder zu verstellen, insbesondere aufrechtzuerhalten, wenn der erste Energiewert von einem gegenwärtig benötigten Energiewert der Presseinheit (22) verschieden ist.

11. Kombination nach mindestens einem der vorangehenden Ansprüche, **dadurch gekennzeichnet, dass** die Steuereinheit (104) konfiguriert ist, basierend auf dem Fahrsignal eine Ein- und Ausgabeeinheit (100) anzusteuern, sodass die Ein- und Ausgabeeinheit (100) dem Bediener signalisiert, eine Geschwindigkeit des Zugfahrzeugs (12) zu ändern.

12. Verfahren zum Betreiben einer Zugfahrzeug-Ballenpressen-Kombination (1) nach einem der Ansprüche 1 bis 11.

## Claims

1. Towing vehicle-baler combination comprising a towing vehicle (12) and a baler (10), wherein the towing vehicle (12) comprises a drive train (80) for driving the towing vehicle (12) and a PTO unit (112), and the baler comprises a pick-up unit (20) for picking up crop from the ground and for feeding the crop into a baling unit (22), and the baling unit (22) for receiving the crop from the pick-up unit and for baling a bale, and the combination comprises a control unit (104), wherein the control unit (104) is connected to the drive train (80), and the baling unit (22) can be driven with a first energy value, and the control unit (104) is configured to receive or determine an energy consumption signal or a PTO consumption signal and to determine a total energy value with the energy consumption signal or the PTO consumption signal, **characterized in that** the pick-up unit (20) can be driven with a second energy value, and the control unit (104) is also configured to compare the total energy value with a baler consumption value and to set and/or adjust a speed of the combination (1), in particular the drive train (80), with a driving signal if the total energy value is different from the baler consumption value.

2. Combination according to Claim 1, **characterized in that** the control unit (104) is configured to compare the total energy value with a baler consumption value and to set and/or adjust a density of the bale with an actuating signal if the total energy value is different from the baler consumption value.

3. Combination according to at least one of the preceding claims, **characterized in that** the baler consumption value is equal to the sum of the first and second energy values.

4. Combination according to at least one of the preceding claims, **characterized in that** the combination (1) comprises a first sensor (52) for capturing the first energy value of the baling unit (22) and for capturing the second energy value of the pick-up unit (20), wherein the control unit (104) is connected to the first sensor (52), and the control unit (104) is configured to determine the sum of the first and second energy values using the signal from the first sensor (52).

5. Combination according to at least one of the preceding claims, **characterized in that** the combination (1) comprises a first sensor (52) for capturing the first energy value of the baling unit (22) and a second sensor (54) for capturing the second energy value of the pick-up unit (20), wherein the control unit (104) is connected to the first and second sensors (52, 54), and the control unit (104) is configured to determine the first and second energy values and the sum of the first and second energy values using the signals from the first and second sensors (52, 54).

6. Combination according to at least one of the preceding claims, **characterized in that** the combination (1) comprises a drive unit (56) which is mechanically connected to the baling unit (22) and the pick-up unit (20) and can be used to drive the baling unit (22) and the pick-up unit (20).

7. Combination according to at least one of the preceding claims, **characterized in that** the first energy value can be determined with the first sensor (52) on a first drive shaft (150) of the drive unit (56) and the second energy value can be determined with the second sensor (54) on a second drive shaft (152) of the drive unit (56), or the sum of the first and second energy values can be determined with the first sensor (52) on an output shaft (144) or a transmission unit of the drive unit (56).

8. Combination according to at least one of the preceding claims, **characterized in that** the control unit (104) is configured:
to set an output size of the fully formed bale (200), wherein the output size defines when the fully formed bale is output, and to set and/or adjust a speed of the combination (1) with the driving signal and/or to set and/or adjust a density of the bale (200) with the actuating signal, and not to change the output size, if the total energy value is different from the baler consumption value.

9. Combination according to at least one of the preceding claims, **characterized in that** the output size is a volume and/or diameter and/or a radius and/or a mass of the bale (200) and/or a tension of the baling means (30) and/or a distribution of the crop, in particular a lateral distribution of the crop, in the windrow (36).

10. Combination according to at least one of the preceding claims, **characterized in that** the control unit (104) is configured to set and/or adjust, in particular maintain, a density of the bale (200) with the actuating signal if the first energy value is different from a presently required energy value of the baling unit (22).

11. Combination according to at least one of the preceding claims, **characterized in that** the control unit (104) is configured to control an input and output unit (100) based on the driving signal, with the result that the input and output unit (100) signals to the operator to change a speed of the towing vehicle (12).

12. Method for operating a towing vehicle-baler combination (1) according to one of Claims 1 to 11.

## Revendications

1. Combinaison véhicule tracteur-presse à balles, comprenant un véhicule tracteur (12) et une presse à balles (10), le véhicule tracteur (12) comprenant un groupe motopropulseur (80) pour entraîner le véhicule tracteur (12) et une unité de prise de force (112), et la presse à balles comprenant une unité de réception (20) destinée à recevoir une récolte du sol et à amener la récolte dans une unité de pressage (22), et l'unité de pressage (22) destinée à recevoir la récolte de l'unité de réception et à presser une balle, et la combinaison comprenant une unité de commande (104), l'unité de commande (104) étant reliée au groupe motopropulseur (80), et l'unité de pressage (22) pouvant être entraînée avec une première valeur d'énergie, et l'unité de commande (104) étant configurée pour recevoir ou déterminer un signal de consommation d'énergie ou un signal de consommation de PDF, et pour déterminer une valeur d'énergie totale avec le signal de consommation d'énergie ou le signal de consommation de PDF, **caractérisée en ce que** l'unité de réception (20) peut être entraînée avec une deuxième valeur d'énergie, et l'unité de commande (104) est configurée par ailleurs pour comparer la valeur d'énergie totale à une valeur de consommation de presse à balles et pour régler et/ou ajuster une vitesse de la combinaison (1), en particulier le groupe motopropulseur (80), avec un signal de déplacement lorsque la valeur d'énergie totale est différente de la valeur de consommation de presse à balles.

2. Combinaison selon la revendication 1, **caractérisée en ce que** l'unité de commande (104) est configurée pour comparer la valeur d'énergie totale à une valeur de consommation de presse à balles, et pour régler et/ou ajuster une densité de la balle avec un signal de réglage lorsque la valeur d'énergie totale est différente de la valeur de consommation de presse à balles.

3. Combinaison selon au moins l'une des revendications précédentes, **caractérisée en ce que** la valeur de consommation de presse à balles est égale à la somme de la première et de la deuxième valeur d'énergie.

4. Combinaison selon au moins l'une des revendications précédentes, **caractérisée en ce que** la combinaison (1) comprend un premier capteur (52) destiné à détecter la première valeur d'énergie de l'unité de pressage (22) et destiné à détecter la deuxième valeur d'énergie de l'unité de réception (20), l'unité de commande (104) étant reliée au premier capteur (52), et l'unité de commande (104) est configurée pour déterminer à l'aide du signal du premier capteur (52) la somme de la première et la deuxième valeur d'énergie.

5. Combinaison selon au moins l'une des revendications précédentes, **caractérisée en ce que** la combinaison (1) comprend un premier capteur (52) destiné à détecter la première valeur d'énergie de l'unité de pressage (22) et un deuxième capteur (54) destiné à détecter la deuxième valeur d'énergie de l'unité de réception (20), l'unité de commande (104) étant reliée au premier et au deuxième capteur (52, 54), et l'unité de commande (104) est configurée pour déterminer à l'aide des signaux du premier et du deuxième capteur (52, 54) la première et la deuxième valeur d'énergie et la somme de la première et la deuxième valeur d'énergie.

6. Combinaison selon au moins l'une des revendications précédentes, **caractérisée en ce que** la combinaison (1) comprend une unité d'entraînement (56) qui est reliée mécaniquement à l'unité de pressage (22) et à l'unité de réception (20) et avec laquelle l'unité de pressage (22) et l'unité de réception (20) peuvent être entraînées.

7. Combinaison selon au moins l'une des revendications précédentes, **caractérisée en ce que** la première valeur d'énergie peut être déterminée avec le premier capteur (52) sur un premier arbre d'entraînement (150) de l'unité d'entraînement (56) et la deuxième valeur d'énergie peut être déterminée avec le deuxième capteur (54) sur un deuxième arbre d'entraînement (152) de l'unité d'entraînement (56), ou la somme de la première et la deuxième valeur d'énergie peut être déterminée avec le premier capteur (52) sur un arbre de sortie (144) ou sur une unité de transmission de l'unité d'entraînement (56).

8. Combinaison selon au moins l'une des revendications précédentes, **caractérisée en ce que** l'unité de commande (104) est configurée pour :
régler une taille de sortie de la balle (200) entièrement formée, la taille de sortie définissant le moment où la balle entièrement formée est délivrée, et pour régler et/ou ajuster avec le signal de déplacement une vitesse de la combinaison (1) et/ou pour régler et/ou ajuster avec le signal de réglage une densité de la balle (200), et pour ne pas modifier la taille de sortie lorsque la valeur d'énergie totale est différente de la valeur de consommation de presse à balles.

9. Combinaison selon au moins l'une des revendications précédentes, **caractérisée en ce que** la grandeur de sortie est un volume et/ou un diamètre et/ou un rayon et/ou une masse de la balle (200) et/ou une tension des moyens de pressage (30) et/ou une répartition de la récolte, en particulier une répartition latérale de la récolte dans l'andain (36).

10. Combinaison selon au moins l'une des revendications précédentes, **caractérisée en ce que** l'unité de commande (104) est configurée pour régler et/ou ajuster avec le signal de réglage une densité de la balle (200), en particulier pour la conserver lorsque la première valeur d'énergie est différente d'une valeur d'énergie actuellement requise de l'unité de pressage (22).

11. Combinaison selon au moins l'une des revendications précédentes, **caractérisée en ce que** l'unité de commande (104) est configurée pour piloter une unité d'entrée et de sortie (100) sur la base du signal de déplacement, si bien que l'unité d'entrée et de sortie (100) signale au conducteur la modification d'une vitesse du véhicule tracteur (12).

12. Procédé destiné à faire fonctionner une combinaison véhicule tracteur-presse à balles (1) selon l'une des revendications 1 à 11.
